# EUROPÄISCHE PATENTSCHRIFT

(11) **EP 2 321 086 B1**
(45) Veröffentlichungstag und Bekanntmachung des Hinweises auf die Patenterteilung: **20.11.2013**
(21) Anmeldenummer: 09776620.8
(22) Anmeldetag: 16.05.2009
(51) Int. Cl.: B23K 9/20, B23P 19/00, B23K 11/00

(54) **HALTEEINRICHTUNG FÜR BOLZEN, FÜGEKOPF UND VERFAHREN**
MOUNTING FIXTURE FOR PINS, RIVET HEAD, METHOD
DISPOSITIF DE MAINTIEN POUR BOULONS, TÊTE D'ASSEMBLAGE ET PROCÉDÉ

(30) Priorität: 08.07.2008 DE 102008033371
(43) Veröffentlichungstag der Anmeldung: 18.05.2011
(73) Patentinhaber: Newfrey LLC, Newark, Delaware 19711 (US)
(72) Erfinder: HAIN, Jochen, 35394 Giessen (DE); SCHUG, Alexander, 35394 Giessen (DE); BRIEL, Karl, Heinz, 35394 Giessen (DE); FEIERABEND, Markus, 35394 Giessen (DE); SCHNEIDER, Michael, 35394 Giessen (DE); ROSEMANN, Frank, 35394 Giessen (DE); WERNER, Wolfgang, 35394 Giessen (DE); KNETSCH, Harald, 35394 Giessen (DE)
(74) Vertreter: Witte, Weller & Partner
(86) Internationale Anmeldenummer: PCT/EP2009/003503
(87) Internationale Veröffentlichungsnummer: WO 2010/003478

(56) Entgegenhaltungen:
- EP-A- 1 495 828
- DE-A1- 2 447 004
- US-A- 4 862 774
- US-A- 5 798 494
- US-A1- 2004 056 005
- US-A1- 2006 059 678
- US-B1- 6 260 734

## Beschreibung

Die vorliegende Erfindung betrifft Halteeinrichtungen für Bolzen und ein Verfahren zum Zuführen eines Bolzens zu einem Fügekopf gemäß dem Oberbegriff der Ansprüche 1, 8 und 10 (siehe, z.B., US 5 798 494).

Eine derartige Halteeinrichtung ist auch aus dem Dokument EP 1 495 828 B1 bekannt.

Die vorliegende Erfindung betrifft ferner einen Fügekopf zum Fügen von Bolzen auf Werkstücke mit einer solchen Halteeinrichtung (siehe Anspruch 9).

Auf dem Gebiet der Fügetechnik ist es bekannt, Bolzen auf die Oberfläche eines Werkstückes zu fügen. Hierunter fällt das sogenannte Bolzenschweißen, bei dem ein Bolzen mit der Oberfläche eines Werkstückes verschweißt wird. Alternative Fügetechniken beinhalten beispielsweise das Kleben eines Bolzens auf die Oberfläche eines Werkstückes.

Derartige Prozesse werden häufig automatisiert durchgeführt, beispielsweise in der Kraftfahrzeugindustrie, wo eine Vielzahl derartiger Bolzen auf das Fahrzeugblech gefügt wird, um Anker für Befestigungsmittel, Verkleidungen etc. zu schaffen. Das automatisierte Fügen von Bolzen auf Werkstücke beinhaltet in der Regel, einen Fügekopf an einem Roboter vorzusehen. Der Fügekopf wird dabei mit einer Versorgungseinrichtung verbunden, die beispielsweise den elektrischen Schweißstrom und sonstige Steuersignale bereitstellt. Ferner ist es bevorzugt, die Bolzen dem Fügekopf automatisiert zuzuführen. Dies erfolgt in der Regel durch Pressluft durch Zuführschläuche hindurch. Für hohe Taktzeiten ist es dabei sinnvoll, die Bolzen sozusagen von hinten in eine Halteeinrichtung des Fügekopfes zuzuführen. Die Halteeinrichtung dient dazu, den Bolzen in eine definierte Bereitstellungsposition zu versetzen, ausgehend von der ein Fügeprozess eingeleitet werden kann.

Der Durchmesser der Zuführkanäle ist in der Regel etwas größer als der Durchmesser des Flanschabschnittes, um einen leichtgängigen Transport des Bolzens darin zu ermöglichen. Auch in der Halteeinrichtung ist der Innendurchmesser des Einführabschnittes in der Regel etwas größer als der Außendurchmesser des Flanschabschnittes. Dies kann dazu führen, dass ein zu der Halteeinrichtung zugeführter Bolzen in der Halteeinrichtung in eine Schräglage kommt und zunächst wieder mit einer Schweißachse ausgerichtet (zentriert) werden muss, bevor der Bolzen in die Bereitschaftsposition überführt werden kann. In manchen Situationen kann es sein, dass diese Zentrierung nicht gelingt, was dann dazu führt, dass der zugeführte Bolzen aus der Halteeinrichtung ausgeworfen werden muss. Der Bolzen fällt dabei unkontrolliert nach unten, entweder auf den Boden oder auch z.B. im Automobilbau in die Karosserie hinein. Die ausgeworfenen Bolzen liegen dann verteilt auf dem Boden und werden aufgekehrt und weggeworfen. In einer Karosserie liegengebliebene Bolzen können später zu störenden Geräuschen beim Fahren führen.

Die Halteeinrichtung, die aus dem Dokument EP 1 495 828 B1 bekannt geworden ist, weist eine Sicherungseinrichtung in Form eines innerhalb einer Spannzangenhülle angeordneten Spannzangenelementes auf. Das Spannzangenelement weist eine Mehrzahl von sich axial erstreckenden Armen auf, die radial gegeneinander aufweitbar sind.

Weitere Halteeinrichtungen für Bolzen sind aus den Druckschriften US 5 798 494 A, DE 24 47 004 A1, US 2006/0059678 A1, US 4 862 774 A, US 6 260 734 B1 und US 2004/0056005 A1 bekannt.

Die vorliegende Erfindung hat sich zur Aufgabe gestellt, eine verbesserte Halteeinrichtung, einen verbesserten Fügekopf und ein verbessertes Zuführverfahren anzugeben, wobei insbesondere die Zuverlässigkeit der Zuführung erhöht wird.

Diese Aufgabe wird bei der eingangs genannten Halteeinrichtung dadurch gelöst, dass die Sicherungseinrichtung wenigstens zwei radial gegeneinander bewegliche Sicherungshülsenabschnitte aufweist, die als separate Bauteile ausgebildet sind und zusammen eine Sicherungshülse bilden, siehe Anspruch 1.

Durch die Ausbildung der Sicherungseinrichtung durch zwei radial gegeneinander bewegliche Sicherungshülsenabschnitte, die als separate Bauteile ausgebildet sind, kann die Sicherungseinrichtung konstruktiv einfach gefertigt und in der Halteein-richtung montiert werden. Zudem kann die Zuverlässigkeit der Zuführung des Bolzens erhöht werden. Ferner ist die Sicherungseinrichtung flexibler, da die Kraft, die zum Durchführen des Flanschabschnittes durch die Sicherungseinrichtung hindurch in die Sicherungsposition erforderlich ist, kleiner bzw. an den jeweiligen Bolzentyp angepasster eingerichtet werden kann. Außerdem lässt sich die Sicherungseinrichtung kostengünstig herstellen, bspw. aus Stahl. Durch die Sicherheitseinrichtung, die vorzugsweise im Inneren des Spannzangenbauteils angeordnet ist, kann zudem ein Verschleiß des Spannzangenbauteils verringert werden.

Unter einer sicheren Lagerung des Flanschabschnittes soll vorliegend verstanden werden, dass der Bolzen nicht durch den Einführabschnitt zurückfallen kann (insbesondere wenn die Halteeinrichtung "über Kopf" gehalten wird) und/oder dass der Bolzen gegen eine übermäßige Schräglage innerhalb der Halteeinrichtung gesichert ist.

Generell ist es dabei denkbar, dass der Flanschabschnitt zwischen der Sicherungseinrichtung und dem Einspannabschnitt so gesichert gelagert ist, dass der Bolzen in der Halteeinrichtung in der Sicherungsposition bereits zentriert ist. In diesem Fall kann es z.B. hinreichend sein, den Bolzen in axialer Richtung mit seinem Flanschabschnitt in den Einspannabschnitt hineinzudrücken. Alternativ kann die Sicherungsposition auch so ausgebildet sein, dass der Bolzen, dessen Flanschabschnitt zwischen der Sicherungseinrichtung und dem Einspannabschnitt angeordnet ist, bereits lagerichtig in der Halteeinrichtung gehalten ist, so dass ein anschließender Prozess (wie ein Bolzenschweißprozess) ausgelöst werden kann (die Sicherungsposition ist dann die Bereitstellungsposition).

Bevorzugt ist es jedoch, wenn der Halteeinrichtung ferner eine Zentriereinrichtung zugeordnet ist, die von oben in den Einführabschnitt und in die Sicherungseinrichtung hinein einführbar ist und dazu ausgelegt ist, einen Schaftabschnitt des Bolzens auszurichten bzw. zu zentrieren und zu ergreifen. Bei dieser Ausführungsform muss der Bolzen in der Sicherungsposition nicht vollständig mit der Fügeachse ausgerichtet sein, so dass die Halteeinrichtung mit vergleichsweise großen Toleranzen ausgeführt werden kann. Durch die Sicherungseinrichtung wird jedoch verhindert, dass der Bolzen in der Halteeinrichtung in eine übermäßige Schräglage gelangt, bei der auch eine Zentriereinrichtung nicht dazu in der Lage ist, den Schaftabschnitt des Bolzens auszurichten. Auch in diesem Fall müsste der Bolzen ohne die erfindungsgemäße Sicherungseinrichtung ausgeworfen werden.

Durch die Bereitstellung der Sicherungseinrichtung kann jedoch gewährleistet werden, dass die Zentriereinrichtung den Bolzen immer gut ergreifen und folglich ausrichten bzw. zentrieren kann. Demzufolge kann vermieden werden, dass Bolzen unnötig ausgeworfen werden. Demzufolge ergeben sich beispielsweise in einer Fahrzeugkarosserie keine störenden Geräusche. Auch eine Verschmutzung in der Fertigungszelle wird vermieden. Zudem ergibt sich eine Kosteneinsparung, da ausgeworfene Bolzen generell verworfen werden müssen (Gefahr von Beschädigungen).

Zudem ist es mit der erfindungsgemäßen Halteeinrichtung möglich, auch sog. Großflanschbolzen mit einem vergleichsweise kurzen Schaft sicher zuzuführen.

Erfindungsgemäß wird die obige Aufgabe bei der eingangs genannten Halteeinrichtung ferner gemäß einem zweiten Aspekt gelöst, indem die Sicherungseinrichtung eine Mehrzahl von über einen Umfang des Spannzangenbauteils verteilten und radial elastischen Stützelementen in der Form eines Drahts aufweist, wobei in einer Ruheposition der Stützelemente ein Biegeabschnitt innerhalb des Spannzangenbauteils befindlich ist und somit einen freien Querschnitt innerhalb des Spannzangenbauteils verringert, wobei die radial elastischen Stützelemente sich zurück in die Ruheposition bewegen, wenn der Flanschabschnitt die Biegeabschnitte passiert hat, wobei entsprechend eine Elastizität der Stützelemente so zu wählen ist, dass ein Bolzen die Stützelemente nicht allein mit seiner Gewichtskraft aufbiegen kann, wobei die Stützelemente einen Schaftabschnitt des Bolzens in der Sicherungsposition abstützen, so dass er nicht an dem Spannzangenbauteil zur Anlage kommt und von der Schaftspanneinrichtung sicher gegriffen werden kann, siehe Anspruch 8.

Durch das Vorsehen von radial elastischen und über den Umfang des Spannzangenbauteils verteilten Stützelementen wird im Wesentlichen dieselbe Wirkung wie durch die zwei radial gegeneinander bewegliche Sicherungshülsenabschnitte bewirkt. Beim Einführen eines Bolzens werden die Stützelemente durch den Flanschabschnitt des Bolzens nach außen gedrückt, so dass der Flanschabschnitt des Bolzens die Stützelemente passieren kann. Danach bewegen sich die Stützelemente in ihre ursprüngliche Position zurück. Der Flanschabschnitt kann nun nicht mehr in entgegengesetzter Richtung die Stützelemente passieren. Die Elastizität der Stützelemente ist dabei entsprechend so zu wählen, dass beispielsweise bei einem "über Kopf"-Arbeiten die Gewichtskraft eines Bolzens nicht ausreicht, um die Stützelemente auseinander zu drücken.

Als Stützelemente sind gebogene Drahtelemente vorgesehen, die durch die Längsschlitze zwischen einzelnen Armen der Spannzangeneinrichtung geführt sind. Die Drahtelemente sind gebogen, so dass Biegeabschnitte in der ursprünglichen Position in das Spannzangenbauteil hineinragen und so verhindern, dass der Schaft des Bolzens vollständig an dem Spannzangenbauteil zur Anlage kommt. Auch auf diese alternative Weise wird somit eine sichere Lagerung des Flanschabschnittes im erfindungsgemäßen Sinn erreicht.

Erfindungsgemäß wird die Aufgabe gemäß dem ersten Aspekt ferner gelöst durch ein Verfahren zum Zuführen eines Bolzens zu einem Fügekopf, der zum Fügen des Bolzens auf ein Werkstück dient, wobei der Bolzen einen radial vorstehenden Flanschabschnitt aufweist, mit den Schritten: Zuführen des Bolzens in eine Halteeinrichtung des Fügekopfes, bis der Flanschabschnitt vor einem Einspannabschnitt der Halteeinrichtung angeordnet ist, und Sichern des Bolzens in dieser Position, indem eine Sicherungseinrichtung, die wenigstens zwei radial gegeneinander bewegliche Sicherungshülsenabschnitte aufweist, die als separate Bauteile ausgebildet sind und zusammen eine Sicherungshülse bilden, den Flanschabschnitt hintergreift, siehe Anspruch 10.

Schließlich wird die obige Aufgabe gelöst durch einen Fügekopf zum Fügen von Bolzen auf Werkstücke mit einer erfindungsgemäßen Halteeinrichtung und mit einer Schaftspanneinrichtung, die in die Halteeinrichtung einführbar und dazu ausgelegt ist, den Schaftabschnitt eines Bolzens in der Sicherungsposition aufzunehmen, wobei die Schaftspanneinrichtung dazu ausgelegt ist, den Bolzen aus der Sicherungsposition in eine Bereitstellungsposition zu versetzen.

Die Aufgabe wird somit vollkommen gelöst.

Die Sicherungseinrichtung der erfindungsgemäßen Halteeinrichtung kann generell außerhalb des Einführabschnittes angeordnet sein und sich mit einer Nase oder dgl. in das Innere des Einführabschnittes hinein erstrecken, um die Sicherungsposition einzurichten.

Von besonderem Vorzug ist es jedoch, wenn die Sicherungseinrichtung innerhalb des Einführabschnittes angeordnet ist.

Hierdurch ergibt sich ein konstruktiv einfacher und kompakter Aufbau.

Gemäß einer weiteren bevorzugten Ausführungsform ist die Sicherungshülse so ausgebildet, so dass der Flanschabschnitt durch die Sicherungshülse hindurchführbar ist.

Bei dieser Ausführungsform schließt die Sicherungshülse vorzugsweise unmittelbar an einen Zuführkanal des Fügekopfes an, so dass ein kantenfreier Übergang gewährleistet werden kann.

Dabei ist es von besonderem Vorteil, wenn die Sicherungshülse einen Sicherungsabschnitt aufweist, der benachbart zu dem Einspannabschnitt angeordnet ist, wobei der Sicherungsabschnitt radial aufweitbar ausgebildet ist, derart, dass der Flanschabschnitt in der Sicherungsposition zwischen dem zumindest nicht vollständig aufgeweiteten Sicherungsabschnitt und dem Einspannabschnitt gesichert gelagert ist.

Hierdurch erfolgt die Sicherung des Bolzens in der Sicherungsposition, indem der Sicherungsabschnitt den Flanschabschnitt hintergreift, wenn er nicht vollständig aufgeweitet ist.

Dabei ist es bevorzugt so, dass die von dem Einspannabschnitt auf den Flanschabschnitt ausgeübte Radialkraft größer, und zwar insbesondere deutlich größer ist als jene Radialkraft, die von dem aufweitbaren Sicherungsabschnitt auf den Flanschabschnitt ausgeübt wird.

Generell ist es denkbar, dass der Sicherungsabschnitt aufgrund konstruktiver Randbedingungen automatisch bzw. zwangsläufig hinter den Flanschabschnitt zurückfällt, nachdem er aufgeweitet worden ist. Besonders bevorzugt ist es jedoch, wenn der Sicherungsabschnitt durch elastische Mittel in die nicht aufgeweitete Position zusammengedrückt wird. Die elastischen Mittel sind dabei bevorzugt so ausgebildet, dass nur eine sehr geringe Kraft auf den Flanschabschnitt ausgeübt wird, wenn dieser die Sicherungseinrichtung durchfährt. Hierdurch kann gewährleistet werden, dass der Bolzen auch mit herkömmlichen Mitteln, wie beispielsweise durch Druckluft, verlässlich in die Sicherungsposition eingeführt werden kann.

Bevorzugt sind die Sicherungshülsenabschnitte im Bereich ihrer dem Einspannabschnitt benachbarten Enden folglich mittels einer Vorspanneinrichtung in radialer Richtung aufeinander zu vorgespannt.

Die Vorspanneinrichtung kann beispielsweise durch einen O-Ring aus einem hitzebeständigen Kunststoffmaterial oder auch aus einem Federring aus Metall gebildet sein.

Bevorzugt ist der Flanschabschnitt beim Durchfahren der Sicherungseinrichtung generell von der Sicherungshülse umgeben, so dass vermieden werden kann, dass sich der Flanschabschnitt (der beispielsweise polygon ausgeführt sein kann) an Konturen der Sicherungseinrichtung verfängt.

Dabei ist von besonderem Vorteil, wenn die Sicherungshülsenabschnitte im Bereich ihrer dem Einspannabschnitt gegenüberliegenden Ende einen Bundabschnitt aufweisen, der beweglich an einem Gehäuseabschnitt gelagert ist, derart, dass die Sicherungshülsenabschnitte zumindest im Bereich ihrer dem Einspannabschnitt benachbarten Enden in radialer Richtung aufweitbar sind.

Bei dieser Ausführungsform kann die Sicherungseinrichtung konstruktiv sehr einfach aufgebaut werden, im Idealfall nur durch die zwei Sicherungshülsenabschnitte, die beweglich innerhalb der Halteeinrichtung, genauer beweglich innerhalb des Einführabschnittes, gelagert sind.

Dabei ist es besonders bevorzugt, wenn die Sicherungshülsenabschnitte um eine Kippachse gegeneinander verschwenkbar sind, die quer zu der Einführrichtung ausgerichtet ist und die zwischen dem Bundabschnitt und den Sicherungsenden angeordnet ist.

Bei dieser Ausführungsform hat die Sicherungshülse im Bereich der Kippachse vorzugsweise ihren kleinsten, an den Flanschabschnitt angepassten Innendurchmesser. Da dieser Abschnitt mit dem kleinsten Innendurchmesser im Bereich zwischen dem Bundabschnitt und den Sicherungsenden angeordnet ist, kann aufgrund der relativ kurzen Hebelkräfte eine Vorspanneinrichtung zum radialen Vorspannen der Sicherungshülsenabschnitte verhältnismäßig klein dimensioniert werden. Insgesamt ist es folglich möglich, dass der Flanschabschnitt mit relativ geringem Widerstand durch die Sicherungshülse hindurchgeführt wird, so dass die Zuverlässigkeit der Zuführung erhöht ist.

Bei dieser Ausführungsform ist es ferner vorteilhaft, wenn die Sicherungshülsenabschnitte an ihren aufeinander zuweisenden Seiten von der Kippachse in Richtung hin zu den Sicherungsenden abgeschrägt sind.

Demzufolge ist der Innendurchmesser, der durch die Sicherungshülsenabschnitte im Bereich der Sicherungsenden gebildet wird, kleiner als der Innendurchmesser der Ausgangshülse, aus der die abgeschrägten Sicherungshülsenabschnitte hergestellt worden sind.

Demzufolge kann auf konstruktiv und produktionstechnisch einfache Weise erreicht werden, dass die Sicherungsenden den Flanschabschnitt des durch die Sicherungshülse hindurch geführten Flanschabschnittes hintergreifen können, um die Sicherungsposition einzurichten.

In dem Bereich von der Kippachse hin zu dem Ende der Sicherungshülse, das dem Zuführkanal zugewandt ist, bildet sich folglich bei geschlossener Sicherungshülse (wenn die Sicherungsenden aneinander anliegen) ein Keilraum. Hierdurch ergibt sich im Bereich des Zuführkanals eine relativ große Einführöffnung in die Sicherungshülse hinein, so dass die Zuverlässigkeit der Zuführung ebenfalls erhöht werden kann.

Insgesamt ist es ferner vorteilhaft, wenn das Spannzangenbauteil Spannarme, die den Einspannabschnitt bilden, und Stopparme aufweist, die axial länger sind als die Spannarme.

Durch die Stopparme kann erreicht werden, dass ein Bolzen, der aus der Sicherungsposition in eine Bereitstellungsposition versetzt wird, aufgrund noch nicht hinreichend aufgebauter Einspannkräfte aus der Halteeinrichtung heraus fällt, wenn der Flanschabschnitt an den Spannarmen axial vorbeigedrückt wird.

Dies gilt insbesondere dann, wenn der Fügekopf eine Schaftspanneinrichtung aufweist, die in die Halteeinrichtung einführbar und dazu ausgelegt ist, den Schaftabschnitt eines Bolzens in der Sicherungsposition aufzunehmen. Hierbei wird die radiale Einspannkraft zum Halten des Bolzens in der Bereitstellungsposition durch eine radiale Spannkraft der Spannarme von außen auf die Schaftspanneinrichtung erzeugt. Diese Kraft ist dann, wenn der Flanschabschnitt an den Spannarmen axial vorbeigedrückt wird, im Stand der Technik in manchen Fällen noch nicht hinreichend, um den Bolzen sicher zu halten. In diesem Fall verhindern die Stopparme ein Herausfallen des Bolzens. Anschließend kommen die Spannarme außen an der Schaftspanneinrichtung in Anlage und üben eine Radialkraft auf diese aus, um den Bolzen einzuspannen. Anschließend wird der Flanschabschnitt des Bolzens auch an den Stopparmen axial vorbeigedrückt, um den Bolzen in die Bereitstellungsposition zu versetzen.

Demgemäß ist es bei dem erfindungsgemäßen Zuführverfahren von besonderem Vorteil, wenn der Bolzen in der Sicherungsposition von einer Spanneinrichtung ergriffen und zentriert wird, bevor die Spanneinrichtung in den Einspannabschnitt eingeführt wird, um den Bolzen in eine Bereitstellungsposition zu versetzen.

Alternativ kann vorgesehen sein, dass das Spannzangenbauteil einen zylindrischen geschlitzten Frontbereich aufweist, der den Einspannabschnitt bildet.

Bei dieser Alternative sind somit die Arme des Spannzangenbauteils alle gleich lang und weisen jeweils eine Spannfläche auf, so dass insgesamt eine Art zylindrischer Spannkragen gebildet wird. Beim Durchdrücken des Bolzens durch den zylindrischen geschlitzten Frontbereich wird zunächst der Flanschabschnitt des Bolzens in der Spannfläche gehalten und ein Herausfallen des Bolzens verhindert. Ist der Flanschabschnitt dann an den Spannflächen vorbeigedrückt, liegen diese an der Schaftspanneinrichtung an und drücken sie an den Schaft des Bauteils, das sich dann in der Bereitstellungsposition befindet.

Durch den gleich langen Aufbau der Arme des Spannzangenbauteils lässt sich dieses kostengünstiger herstellen. Zudem verhindern die über den gesamten Umfang anliegenden und gleich langen Spannflächen, dass bei einem Schweißvorgang Schmelze durch die Lücken zwischen den Enden der Arme in einen Innenraum des Spannzangenbauteils tritt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Querschnittsansicht einer Halteeinrichtung gemäß einer Ausführungsform der vorliegenden Erfindung;
- Fig. 2: einen Teil eines Fügekopfes mit der Halteeinrichtung der Fig. 1;
- Fig. 3: eine Querschnittsansicht einer Halteeinrichtung gemäß einer zweiten Ausführungsform der vorliegenden Erfindung;
- Fig. 4: eine Querschnittsansicht einer Halteeinrichtung gemäß einer dritten Ausführungsform der vorliegenden Erfindung, und
- Fig. 5: ein Schweißsystem mit einem Schweißkopf.

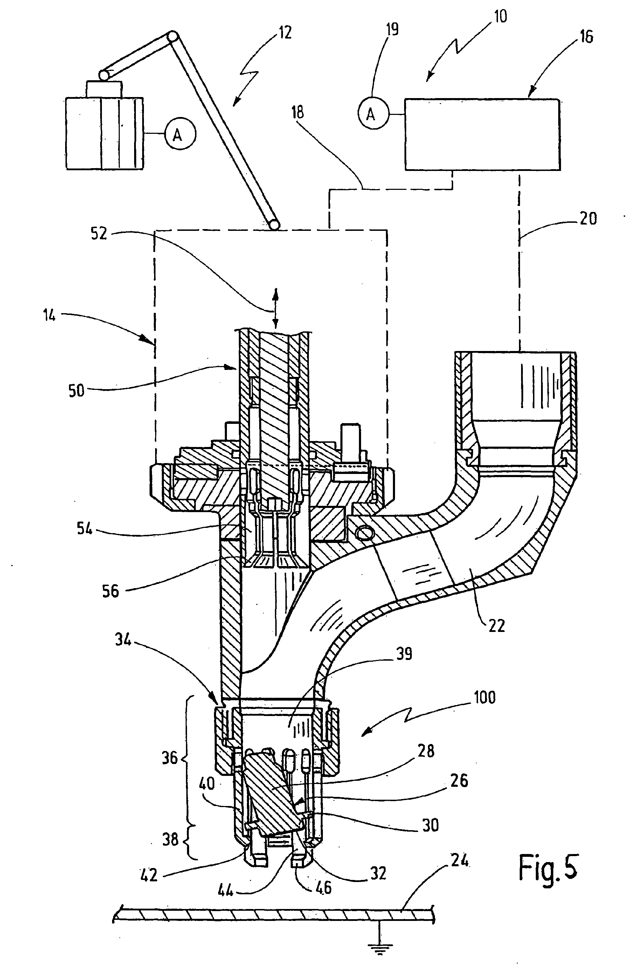

In Fig. 5 ist ein Fügesystem in Form eines Bolzenschweißsystems generell mit 10 bezeichnet. Das Schweißsystem 10 beinhaltet einen Roboter 12, der beispielsweise als Mehrgelenkroboter ausgebildet sein kann. An einem Ende eines Bearbeitungsarmes des Roboters 12 ist ein Schweißkopf 14 festgelegt. Der Schweißkopf 14 ist über eine elektrische Versorgung 18 und über eine Bolzenzuführung 20 mit einer Versorgungseinrichtung 16 verbunden. Die Versorgungseinrichtung 16 beinhaltet typischerweise eine Leistungselektronik zum Bereitstellen eines Schweißstromes, der dem Schweißkopf 14 zugeführt wird. Ferner beinhaltet die Versorgungseinrichtung 16 typischerweise eine Steuereinrichtung, mittels der auch der Roboter 12 angesteuert werden kann, und zwar über eine Robotersteuerung 19. Ferner beinhaltet die Versorgungseinrichtung 16 eine Bolzenversorgung, von der Bolzen vereinzelt der Bolzenzuführung 20 zugeführt werden.

Der Schweißkopf 14 beinhaltet einen mit der Bolzenzuführung 20 verbundenen Zuführkanal 22, über den jeweils ein Bolzen 26 in den Schweißkopf 14 einführbar ist. Der dem Schweißkopf 14 zugeführte Bolzen 26 ist mittels des Schweißsystems 10 auf ein Werkstück 24 wie beispielsweise ein Blech zu schweißen. Das Schweißsystem 10 ist vorliegend als Bolzenschweißsystem ausgebildet, das beispielsweise nach dem Hubzündungsverfahren arbeiten kann. Bei diesem Verfahren wird der Bolzen 26 mittels des Schweißkopfes 14 zunächst auf das Werkstück 24 aufgesetzt. Anschließend wird ein sog. Pilotstrom durch den Bolzen 26 und das Werkstück 24 geleitet. Danach wird der Bolzen 26 von dem Werkstück leicht abgehoben, wobei ein Lichtbogen gezogen wird. Anschließend wird der Strom auf einen Schweißstrom erhöht, wobei die einander gegenüberliegenden Flächen des Bolzens 26 und des Werkstückes 24 angeschmolzen werden. Schließlich wird der Bolzen 26 wieder auf das Werkstück 24 abgesenkt, und der Schweißstrom wird abgeschaltet. Die verbundenen Schmelzen von Bolzen 26 und Werkstück 24 erstarren, so dass der Bolzen 26 schließlich fest mit dem Werkstück 24 verbunden ist. Derartige Bolzenschweißsysteme werden in der Kraftfahrzeugindustrie in weitem Umfang eingesetzt.

Alternativ kann das Fügesystem 10 jedoch auch dazu ausgelegt sein, den Bolzen 26 auf das Werkstück 24 zu kleben oder zu löten.

Der Bolzen 26 weist einen Schaftabschnitt 28 auf, der beispielsweise mit einem Außengewinde versehen sein kann. Ferner weist der Bolzen 26 einen gegenüber dem Schaftabschnitt 28 radial vorstehenden Flanschabschnitt 30 auf, der an seinem Außenumfang beispielsweise polygonal ausgestaltet sein kann. Schließlich weist der Bolzen 26 einen Schweißabschnitt 32 auf, der mit dem Werkstück 24 zu verbinden ist.

Der Fügekopf 14 beinhaltet eine Halteeinrichtung 100 für den Bolzen 26, die dazu dient, einen über den Zuführkanal 22 zugeführten Bolzen in eine Bereitstellungsposition zu versetzen, in der der Bolzen 26 eine definierte Lage in Bezug auf den Fügekopf 14 hat und die der Bolzen 26 einnimmt, bevor der oben beschriebene Fügeprozess eingeleitet wird.

Die Halteeinrichtung 100 beinhaltet einen Gehäuseabschnitt 34, der starr mit dem Fügekopf 14 verbunden ist. Ferner beinhaltet die Halteeinrichtung 100 einen Einführabschnitt 36, der als Hohlabschnitt ausgebildet ist und mit einem Ende des Zuführkanals 22 verbunden ist. Ferner beinhaltet die Halteeinrichtung 100 einen Einspannabschnitt 38, der dazu ausgelegt ist, den Bolzen 26 in der Bereitstellungsposition kraftschlüssig einzuspannen (durch nach innen wirkende Radialkräfte). Der Einführabschnitt 36 und der Einspannabschnitt 38 sind vorliegend durch ein einzelnes Spannzangenbauteil 39 gebildet, das im oberen Bereich des Einführabschnittes 36 einen nicht näher bezeichneten Ringabschnitt aufweist. Der Ringabschnitt ist mit dem Zuführkanal 22 verbunden. Von dem entgegengesetzten Ende des Ringabschnittes erstreckt sich eine Mehrzahl von umfänglich verteilt angeordneten Spannarmen 40, an deren Enden jeweils Spannnasen 42 ausgebildet sind, die sich von den Spannarmen 40 radial schräg nach innen erstrecken.

Ferner erstreckt sich von dem Ringabschnitt eine Mehrzahl von Stopparmen 44. Die Stopparme 44 sind generell länger als die Spannarme 40 und sind an ihren Enden mit Stoppnasen 46 versehen, die radial nach innen gerichtet sind. Die Stopparme 44 und die Spannarme 40 sind über den Umfang der Halteeinrichtung beispielsweise abwechselnd angeordnet. Die Stopparme 44 erfüllen nicht nur die Funktion eines Anschlages, wie nachstehend beschrieben, sondern auch eine Spannfunktion. Die Stopparme 44 bilden daher auch zweite Spannarme.

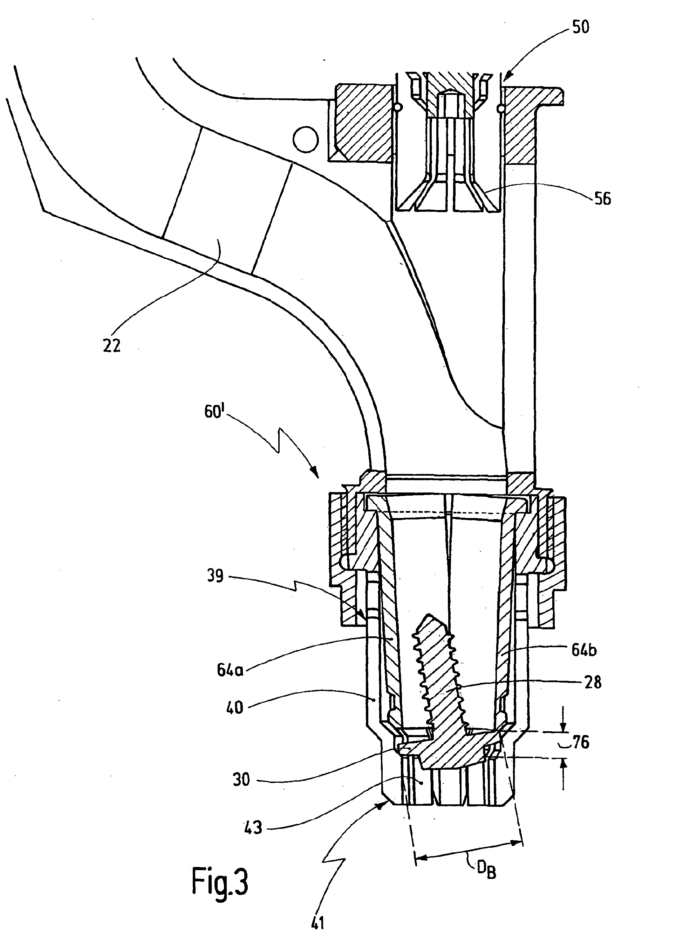

Die Spannarme 40 und die Stopparme 44 sind in radialer Richtung elastisch aufweitbar. Der durch die Spannnasen 42 bzw. die Stoppnasen 46 definierte Innendurchmesser ist jeweils kleiner als der Außendurchmesser des Flanschabschnittes 30. In Fig. 3 ist ein in die Halteeinrichtung 100 zugeführter Bolzen 26 gezeigt, der über die Bolzenzuführung 20 und den Zuführkanal 22 von oben durch den Einführabschnitt 36 hindurch zugeführt worden ist. Der Bolzen 26 ist dabei in einer deutlichen Schräglage gezeigt, die bei dieser Art von Halteeinrichtung nicht generell vermeidbar ist. Dies liegt daran, dass der Flanschabschnitt 30 innerhalb des Einführabschnittes 36 mit der Innenseite der Spannarme 40 bzw. der Stopparme 44 in Kontakt kommt. Dies, die Tatsache, dass der Außenumfang des Flanschabschnittes 30 häufig polygonal ausgebildet ist, und/oder die Tatsache, dass zwischen den Armen 40, 44 Längsnuten ausgebildet sind, kann dazu führen, dass sich eine solche Schräglage einstellt.

Der Halteeinrichtung ist ferner eine Schaftspanneinrichtung 50 zugeordnet, die an dem Fügekopf 14 in axialer Richtung beweglich ausgebildet ist, wie es bei 52 gezeigt ist. Die Schaftspanneinrichtung 50 weist einen Schaftaufnahmeabschnitt 54 auf, der eine Mehrzahl von radial aufweitbaren, sich in axialer Richtung erstreckenden Armen beinhaltet. Ferner beinhaltet die Schaftspanneinrichtung 50 einen Zentrierabschnitt 56. Der Zentrierabschnitt 56 ist an den Enden der Arme des Schaftaufnahmeabschnittes 54 gebildet, wobei die Arme im Bereich des Zentrierabschnittes schräg nach außen laufen, so dass sie gemeinsam einen Einführkonus bilden.

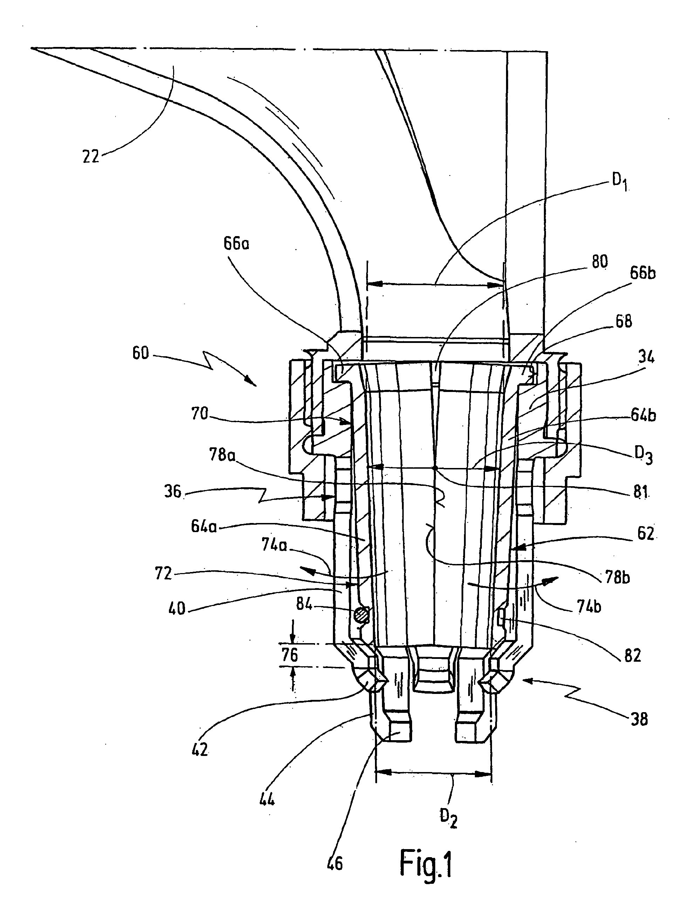

Zum Versetzen des Bolzens 26 in eine Bereitstellungsposition wird die Schaftspanneinrichtung 50 nach unten bewegt (die Angabe "nach unten" bezieht sich auf die Darstellung der Fig. 1, ist jedoch nicht einschränkend zu verstehen), und zwar in die Halteeinrichtung 100 hinein. Dabei ergreift der Zentrierabschnitt 56 das obere Ende des Schaftabschnittes 28 und richtet den Bolzen 26 auf, wobei der Schaftabschnitt 28 in den Schaftaufnahmeabschnitt 54 eingeführt wird, bis ein oberes Ende des Schaftabschnittes 28 an einem Anschlag der Schaftspanneinrichtung 50 anschlägt. Dabei stützt sich der Bolzen 26 an den Spannnasen 42 ab.

Anschließend wird die Schaftspanneinrichtung 50 weiter nach unten bewegt, wobei der Flanschabschnitt 30 zunächst an den Spannnasen 42 vorbeigedrückt wird. Dabei weiten sich die Spannarme 40 radial nach außen auf. Die Stoppnasen 46 der Stopparme 44 verhindern, dass der Bolzen 46 anschließend aus der Halteeinrichtung 100 herausfällt, indem die Stoppnasen 46 an der Unterseite des Flanschabschnittes 30 angreift. Ausgehend hiervon wird die Schaftspanneinrichtung 50 weiter nach unten bewegt, wobei die Spannnasen 42 am Außenumfang der Schaftspanneinrichtung 50 angreifen und hierdurch den Bolzen 26 in der Schaftspanneinrichtung 50 fest einspannen.

Anschließend wird die Schaftspanneinrichtung 50 noch weiter nach unten bewegt, bis der Flanschabschnitt 30 auch an den Stoppnasen 46 vorbeigedrückt wird. Eine Bereitstellungsposition ist erreicht, wenn der Flanschabschnitt 30 etwas unterhalb des unteren Endes der Stoppnasen 46 liegt. Durch die Spannarme 40 und die Stopparme 44 wird in diesem Zustand weiterhin eine Radialkraft auf die Schaftspanneinrichtung 50 ausgeübt, so dass der Bolzen 26 in dieser Position kraftschlüssig in der Halteeinrichtung 100 gehalten bzw. eingespannt ist. Ausgehend hiervon kann der oben beschriebene Fügeprozess eingeleitet werden. Wenn der Bolzen 26 starr auf das Werkstück 24 gefügt ist, wird der Fügekopf 14 zurückgezogen (wobei die Schaftspanneinrichtung 50 innerhalb des Fügekopfes 14 zunächst zurückgefahren werden kann). Hierdurch wird der Bolzen 26 von der Halteeinrichtung 100 freigegeben. Anschließend kann ein weiterer Bolzen 26 über den Zuführkanal 22 zugeführt werden und ein weiterer Fügeprozess eingeleitet werden.

Durch das so eingerichtete Doppelspannsystem kann die Bolzenzuführung weitgehend verlässlich realisiert werden. Nichtsdestotrotz kann es vorkommen, dass ein Bolzen 26 in der Halteeinrichtung 100 so schräg liegt bzw. verklemmt ist, dass auch der Zentrierabschnitt 56 den Bolzen 26 nicht mehr ausrichten kann. In diesem Fall wird der Bolzen 26 über die Halteeinrichtung 100 nach unten ausgeworfen, was zu den eingangs genannten Problemen führt.

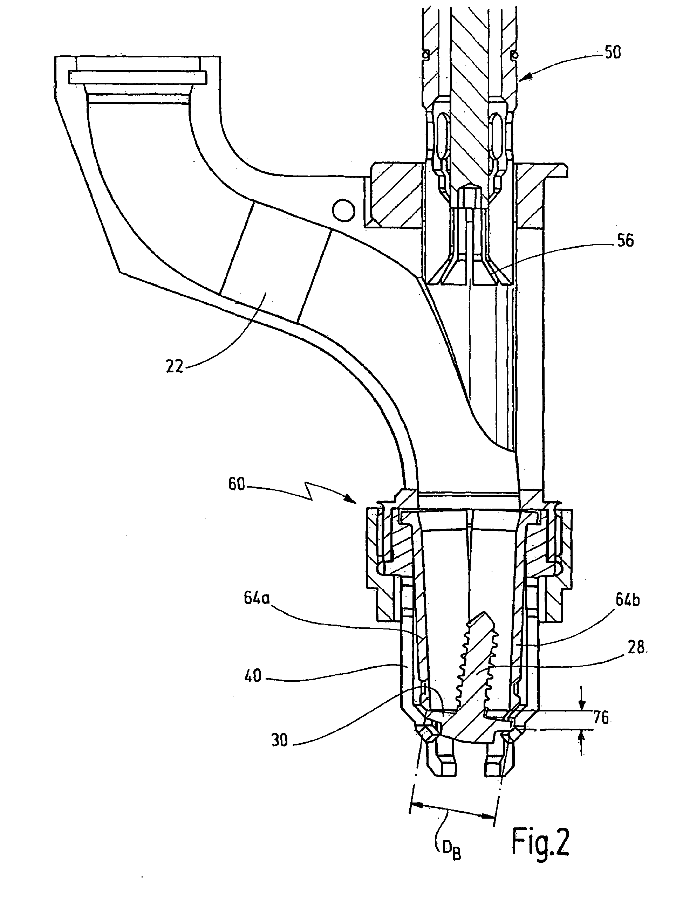

In den Fig. 1 und 2 ist eine verbesserte Ausführungsform einer erfindungsgemäßen Halteeinrichtung bzw. eines Fügekopfes gezeigt, mit dem diese Probleme weiter verringert werden können.

Die in den Fig. 1 und 2 gezeigte Halteeinrichtung entspricht hinsichtlich Aufbau und Funktionsweise generell der Halteeinrichtung 100 der Fig. 5. Gleiche Elemente sind daher mit gleichen Bezugszeichen bezeichnet. Im Folgenden wird lediglich auf die Unterschiede eingegangen. Ferner entspricht der Fügekopf 14, an dem die Halteeinrichtung 60 der Fig. 1 und 2 zu verwenden ist, dem Fügekopf 14 der Fig. 5. Auch der generelle Verfahrensablauf beim Zuführen und Bereitstellen von Bolzen und der anschließende Fügeprozess sind im Übrigen identisch, soweit nichts anderes erwähnt ist.

Die in den Fig. 1 und 2 gezeigte Halteeinrichtung 60 ist generell aufgebaut wie die Halteeinrichtung 100, nämlich mit einem Einführabschnitt 36 und einem Einspannabschnitt 38. Die Halteeinrichtung 60 weist jedoch zusätzlich eine Sicherungseinrichtung 62 auf, die verhindert, dass sich ein in die Halteeinrichtung 60 zugeführter Bolzen 26 darin verklemmt oder eine solche Schräglage einnimmt, dass er von dem Zentrierabschnitt 56 nicht mehr aufgerichtet werden kann. Ferner kann die Sicherungseinrichtung 62 alternativ oder zusätzlich verhindern, dass ein in die Halteeinrichtung 60 zugeführter Bolzen 26 entgegen der Zuführrichtung zurückfällt (was beispielsweise der Fall sein könnte, wenn ein Bolzen 26 entgegen der Schwerkraft auf ein Werkstück 24 zu fügen ist, beispielsweise "über Kopf").

Die Sicherungseinrichtung 62 ist im Inneren der Halteeinrichtung 60 ausgebildet. Zu diesem Zweck ist der Innendurchmesser der Spannarme 40 und der Stopparme 44 größer als ein Durchmesser D₁ des Zuführkanals 22. Die Sicherungseinrichtung 62 ist durch eine Mehrzahl von Sicherungshülsenabschnitte 64 gebildet (im vorliegenden Fall zwei Sicherungshülsenabschnitte 64a, 64b), die zusammen etwa eine Hülsenform definieren und innerhalb des Einführabschnittes 36 konzentrisch hierzu angeordnet sind.

An ihrem oberen Ende weisen die Sicherungshülsenabschnitte 64 jeweils einen umfänglichen Bundabschnitt 66a, 66b auf, der in einer inneren Umfangsnut 68 des Gehäuseabschnittes 34 aufgenommen ist. Der Bundabschnitt 66 ist dabei beweglich innerhalb der Nut 68 aufgenommen.

Die Sicherungshülsenabschnitte 64 weisen jeweils einen Lagerabschnitt 70 auf, der dem Zuführkanal 22 zugewandt ist und den Bundabschnitt 66 beinhaltet. Ferner weisen die Sicherungshülsenabschnitte 64 jeweils einen Sicherungsabschnitt 72 auf, der dem Einspannabschnitt 38 zugewandt ist.

Die Sicherungshülsenabschnitte 64a, 64b definieren einen Innenkanal, der im Bereich des Lagerabschnittes 70 einen Durchmesser aufweist, der etwa dem Durchmesser D₁ des Zuführkanals 22 entspricht. An einem unteren Ende des Sicherungsabschnittes 72 weist der Innenkanal einen Durchmesser D₂ auf, der kleiner ist als der Durchmesser D₁ und kleiner als der in Fig. 2 gezeigte Außendurchmesser D_{B} des Bolzens 26. Die Sicherungsabschnitte 72 der Sicherungshülsenabschnitte 64 sind insbesondere aufgrund der beweglichen Lagerung des Bundabschnittes 66 in radialer Richtung aufweitbar, wie dies bei 74a bzw. 74b gezeigt ist. Demzufolge kann ein über den Zuführkanal 22 zugeführter Bolzen mit seinem Flanschabschnitt 30 durch die Sicherungseinrichtung 62 hindurchgeführt werden. Die Sicherungsabschnitte 72 weiten sich dabei auf. Schließlich gelangt der Flanschabschnitt 30 in eine Position oberhalb der Spannnasen 42 der Spannarme 40. Sobald die Sicherungsabschnitte 72 wieder in die in Fig. 1 gezeigte Position zurückfallen, greifen die unteren Enden der Sicherungsabschnitte 72 hinter den Flanschabschnitt, wie es in Fig. 2 gezeigt ist.

Dabei ist ein Freiraum 76 zwischen einem unteren Ende der Sicherungsabschnitte 72 und einem oberen Ende der Spannnasen 42 so gewählt, dass der Bolzen 26 keine extreme Schräglage mehr einnehmen kann. Ferner wird verhindert, dass der Bolzen 26 wieder in Richtung des Zuführkanals 22 zurückfallen kann. Demzufolge kann sich allenfalls eine Schrägposition ergeben, wie sie in Fig. 2 gezeigt ist. In dieser Position ist der Schaftabschnitt 28 generell beabstandet von dem Innenumfang der Sicherungseinrichtung 62, so dass die Schaftspanneinrichtung 50 den Schaftabschnitt 28 problemlos ergreifen kann (über deren Zentrierabschnitt 56).

Obgleich die Sicherungseinrichtung 62 vorliegend durch zwei Sicherungshülsenabschnitte 64 im Inneren der Halteeinrichtung 60 ausgebildet ist, versteht sich, dass eine solche Sicherungseinrichtung auch außerhalb der Halteeinrichtung 60 angeordnet sein kann und beispielsweise über Durchbrechungen in der Halteeinrichtung an geeigneter Stelle in den Innenumfang der Halteeinrichtung 60 hineinragen kann. Auch ist es generell denkbar, dass die Sicherungseinrichtung 62 durch elastisch verformbare Mittel am Innenumfang der Halteeinrichtung 60 ausgebildet ist. Jedenfalls ist die Sicherungseinrichtung 62 dazu ausgelegt, den Flanschabschnitt 30 zwischen dem Einspannabschnitt 38 und der Sicherungseinrichtung 62 so gesichert zu halten, dass der Bolzen 26 keine übermäßige Schräglage einnimmt und nicht in den Zuführkanal 22 zurückfallen kann.

Die Sicherungshülsenabschnitte 64 sind vorliegend gebildet aus zwei Hälften einer zylindrischen Hülse, die an ihrem oberen Ende mit dem Bundabschnitt 66 ausgebildet ist. Die zwei Hülsenhälften sind im Bereich des Sicherungsabschnittes 72 abgeschrägt, wie es bei 78a bzw. 78b in Fig. 1 gezeigt ist. Hierdurch ergibt sich dann, wenn diese Abschrägungen 78 aneinander liegen, dass die Sicherungshülsenabschnitte 64 im Bereich des Lagerabschnittes 70 zwischen sich einen Keilraum 80 definieren. Die Linie des Überganges zwischen dem Lagerabschnitt 70 und dem Sicherungsabschnitt 72 bildet dann eine Art Kippachse bzw. Schwenklager 81 für die Sicherungshülsenabschnitte 64.

An ihrem unteren, dem Einspannabschnitt 38 zugewandten Ende können die Sicherungshülsenabschnitte 64 mit einer Außennut 82 versehen sein. In dieser Außennut 82 können elastische Andruckmittel 84 angeordnet werden, wie beispielsweise ein O-Ring aus einem hitzebeständigen Material oder ein metallischer Federring. Ein O-Ring ist jedoch bevorzugt, da durch diesen eine gleichmäßigere Umfangskraft auf die Sicherungshülsenabschnitte 64 ausgeübt werden kann. Elastische Andruckmittel können beispielsweise auch zwischen der Nut 68 und dem Bundabschnitt angeordnet sein.

Generell ist jedoch auch denkbar, dass die Sicherungshülsenabschnitte 64 auch ohne solche elastischen Andruckmittel 84 funktionieren, indem beispielsweise je nach Lage wenigstens einer der Sicherungshülsenabschnitte 64 in die in Fig. 1 gezeigte Position zurückfällt, nachdem der Flanschabschnitt 30 durch die Sicherungseinrichtung 62 hindurchgeführt worden ist.

In Fig. 3 ist eine alternative zweite Ausführungsform der in den Fig. 1 und 2 dargestellten Halteeinrichtung gezeigt und entspricht hinsichtlich Aufbau und Funktionsweise generell der Halteeinrichtung 60 der Fig. 1 und 2. Gleiche Elemente sind mit gleichen Bezugszeichen bezeichnet. Im Folgenden wird lediglich auf die Unterschiede eingegangen. Ferner entspricht der Fügekopf 14, an dem die Halteeinrichtung 60 der Fig. 3 zu verwenden ist, den Fügekopf 14 der Fig. 5. Auch der generelle Verfahrensablauf beim Zuführen und Bereitstellen von Bolzen und der anschließenden Fügeprozesse sind mit den übrigen identisch, soweit nichts anderes erwähnt ist.

In der in Fig. 3 dargestellten Halteeinrichtung 60' sind keine Stopparme 44 vorgesehen. Stattdessen sind Spannarme 40 vorgesehen, die alle die gleiche Länge aufweisen und einen zylindrischen Frontbereich 41 des Spannzangenbauteils 39 bilden. Das Spannzangenbauteil 39 weist in der bekannten Weise Längsschlitze auf, um den Spannarmen 40 eine Elastizität in radialer Richtung bereitzustellen und die gewünschte radial gerichtete Spannwirkung zu erzielen. Die Zuführung des Bolzens 26, bis dieser die sichere Lage mit seinem Flanschabschnitt 30 erreicht hat, erfolgt so wie dies bereits im Zusammenhang mit der in den Fig. 1 und 2 dargestellten Ausführungsform beschrieben wurde.

Anschließend wird der Schaftabschnitt 28 des Bolzens 26 dann von der Schaftspanneinrichtung 50 ergriffen und durch den zylindrischen geschlitzten Frontbereich 41 gedrückt. Die Schaftspanneinrichtung 50 ist dabei so ausgelegt, dass ihr Außendurchmesser etwas kleiner als der Außendurchmesser des Flanschabschnitts 30 des Bolzens 26 ist. Die Arme 40 werden somit aufgeweitet und klemmen zunächst mit ihren Spannflächen 43 den Flanschabschnitt 30 des Bolzens 26 fest, so dass dieser nicht nach unten herausfallen kann. Dabei bezieht sich "unten" auf die in der Fig. 3 dargestellte Orientierung. Ist der Flanschabschnitt 30 durch den zylindrischen geschlitzten Frontbereich 41 hindurchgedrückt, schnappen die Spannflächen 43 zusammen und klemmen die Schaftspanneinrichtung 50 an ihrer Außenfläche fest. Über die Schaftspanneinrichtung 50 wird dann der Schaftabschnitt 28 des Bolzens 26 gehalten, so dass dieser nicht nach unten herausrutschen kann. Der Bolzen 26 befindet sich nun in der Bereitstellungsposition und kann übergeben werden.

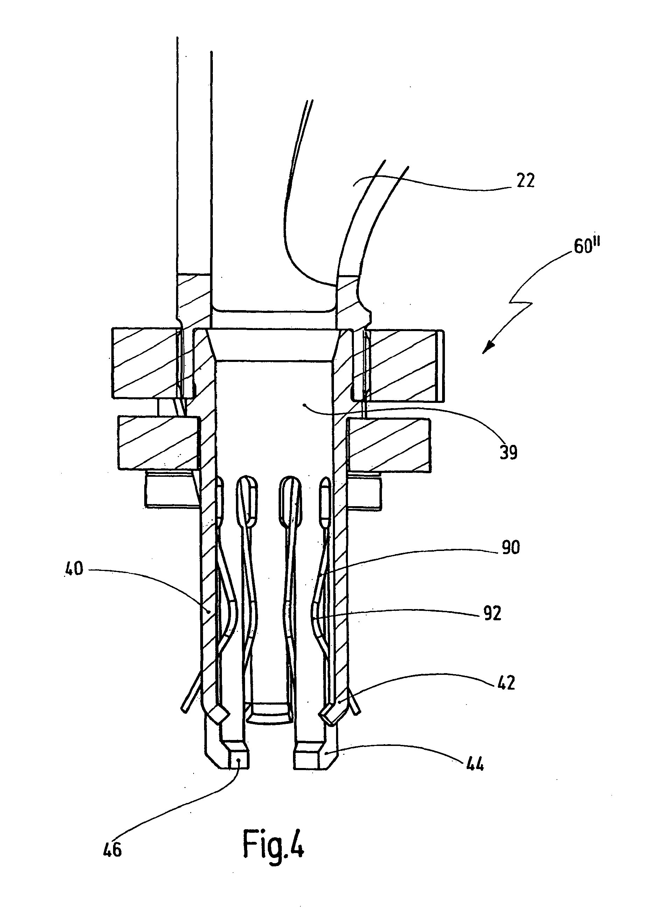

In Fig. 4 ist eine Halteeinrichtung 60" in einer alternativen dritten Ausführungsform gezeigt. Die in der Fig. 4 gezeigte Halteeinrichtung 60" entspricht hinsichtlich Aufbau und Funktionsweise generell der Halteeinrichtung 100 der Fig. 5. Gleiche Elemente sind dabei mit gleichen Bezugszeichen bezeichnet. Im Folgenden wird lediglich auf die Unterschiede eingegangen. Ferner entspricht der Fügekopf 14, in dem die Halteeinrichtung 60" der Fig. 4 zu verwenden ist, dem Fügekopf 14 der Fig. 5. Auch der generelle Verfahrensablauf beim Zuführen und Bereitstellen von Bolzen und der anschließende Fügeprozess sind im Übrigen identisch, soweit nichts anderes erwähnt ist.

Gegenüber der in den Fig. 1 und 2 dargestellten Halteeinrichtung 60 weist die in der Fig. 4 dargestellte Halteeinrichtung 60" keine Sicherungshülsenabschnitte auf, um den Bolzen 26 in einer sicheren Lage zu halten. Das Spannzangenbauteil 39 weist mehrere Arme 42, 44 auf und ist in Längsrichtung geschlitzt, um den Armen 42, 44 in radialer Richtung eine gewisse Elastizität zu verleihen. Durch die Längsschlitze zwischen den Armen 42, 44 ist jeweils gemäß der Erfindung ein Stützelement 90 in der Form eines Drahts geführt, wobei in einer Ruheposition der Stützelemente 90 ein Biegeabschnitt 92 innerhalb des Spannzangenbauteils 39 befindlich ist und somit einen freien Querschnitt innerhalb des Spannzangenbauteils 39 verringert.

Wird nun ein Bolzen 26 in das Spannzangenbauteil 39 geführt, genügt ein gewisser Druck auf den Bolzen 26, damit sein Flanschabschnitt 30 die Stützelemente 90 aufbiegt und die Biegeabschnitte 92 passieren kann. Wenn der Flanschabschnitt 30 die Biegeabschnitte 92 passiert hat, bewegen sich die in radialer Richtung elastischen Stützelemente 90 zurück in ihre in Fig. 4 dargestellte Ausgangslage. Der Flanschabschnitt 28 kann sich nun nicht mehr zurückbewegen, wobei entsprechend die Elastizität der Stützelemente 90 so zu wählen ist, dass ein Bolzen 26 die Stützelemente 90 nicht allein mit seiner Gewichtskraft aufbiegen kann. Der Schaftabschnitt 28 des Bolzens 26 wird an den Stützelementen 90 abgestützt, so dass er nicht an dem Spannzangenbauteil 39 zur Anlage kommt und von der Schaftspanneinrichtung 50 sicher gegriffen werden kann.

In der Fig. 4 ist das Spannzangenbauteil mit Spannarmen 40 und Stopparmen 44 versehen, wie dies auch bei der in Fig. 1 und 2 dargestellten Ausführungsform der Fall ist. Als Alternative ist selbstverständlich auch denkbar, dass das Spannzangenbauteil 39 einen zylindrischen geschlitzten Frontbereich aufweist, wie dies in der in Fig. 3 dargestellten Ausführungsform der Fall ist.

## Patentansprüche

1. Halteeinrichtung (60) für Bolzen (26), die einen radial vorstehenden Flanschabschnitt (30) aufweisen, mit einem Spannzangenbauteil (39), das einen Einspannabschnitt (38) und einen hohlen Einführabschnitt (36) aufweist, wobei ein Bolzen (26) über den Einführabschnitt (36) zu dem Einspannabschnitt (38) einführbar ist und wobei der Einspannabschnitt (38) dazu ausgelegt ist, eine radial nach innen gerichtete Spannkraft zum Einspannen des Bolzens (26) auszuüben, an dem Einführabschnitt (36) eine Sicherungseinrichtung (62) angeordnet ist, an der ein Flanschabschnitt (30) des Bolzens (26) vorbeiführbar ist und die in Bezug auf den Einspannabschnitt (38) so ausgebildet ist, dass ein Flanschabschnitt (30), der an der Sicherungseinrichtung (62) vorbeigeführt ist, in einer Sicherungsposition zwischen der Sicherungseinrichtung (62) und dem Einspannabschnitt (38) gesichert gelagert ist,
**dadurch gekennzeichnet, dass**
die Sicherungseinrichtung (62) wenigstens zwei radial gegeneinander bewegliche Sicherungshülsenabschnitte (64a, 64b) aufweist, die als separate Bauteile ausgebildet sind und zusammen eine Sicherungshülse bilden.

2. Halteeinrichtung nach Anspruch 1, **dadurch gekennzeichnet, dass** die Sicherungshülsenabschnitte (64a, 64b) im Bereich ihrer dem Einspannabschnitt (38) benachbarten Sicherungsenden mittels einer Vorspanneinrichtung in radialer Richtung aufeinander zu vorgespannt sind.

3. Halteeinrichtung nach Anspruch 1 oder 2, **dadurch gekennzeichnet, dass** die Sicherungshülsenabschnitte (64a, 64b) im Bereich ihrer dem Einspannabschnitt (38) gegenüberliegenden Ende einen Bundabschnitt (66) aufweisen, der beweglich an einem Gehäuseabschnitt (34) gelagert ist, derart, dass die Sicherungshülsenabschnitte (64a, 64b) zumindest im Bereich ihrer dem Einspannabschnitt (38) benachbarten Sicherungsenden in radialer Richtung gegeneinander aufweitbar sind.

4. Halteeinrichtung nach Anspruch 3, **dadurch gekennzeichnet, dass** die Sicherungshülsenabschnitte (64a, 64b) um eine Kippachse (81) gegeneinander verschwenkbar sind, die quer zu der Einführrichtung ausgerichtet ist und zwischen dem Bundabschnitt (66) und den Sicherungsenden angeordnet ist.

5. Halteeinrichtung nach Anspruch 4, **dadurch gekennzeichnet, dass** die Sicherungshülsenabschnitte (64a, 64b) an ihren aufeinander zu weisenden Seiten von der Kippachse (81) in Richtung hin zu den Sicherungsenden abgeschrägt sind.

6. Halteeinrichtung nach einem der Ansprüche 1 bis 5, **dadurch gekennzeichnet, dass** das Spannzangenbauteil (39) Spannarme (40), die den Einspannabschnitt (38) bilden, und Stopparme (44) aufweist, die axial länger sind als die Spannarme (40).

7. Halteeinrichtung nach einem der Ansprüche 1 bis 5, **dadurch gekennzeichnet, dass** das Spannzangenbauteil (39) einen zylindrischen geschlitzten Frontbereich (41) aufweist, der den Einspannabschnitt (38) bildet.

8. Halteeinrichtung (60) für Bolzen (26), die einen radial vorstehenden Flanschabschnitt (30) aufweisen, mit einem Spannzangenbauteil (39), das einen Einspannabschnitt (38) und einen hohlen Einführabschnitt (36) aufweist, wobei ein Bolzen (26) über den Einführabschnitt (36) zu dem Einspannabschnitt (38) einführbar ist und wobei der Einspannabschnitt (38) dazu ausgelegt ist, eine radial nach innen gerichtete Spannkraft zum Einspannen des Bolzens (26) auszuüben, an dem Einführabschnitt (36) eine Sicherungseinrichtung (62) angeordnet ist, an der ein Flanschabschnitt (30) des Bolzens (26) vorbeiführbar ist und die in Bezug auf den Einspannabschnitt (38) so ausgebildet ist, dass ein Flanschabschnitt (30), der an der Sicherungseinrichtung (62) vorbeigeführt ist, in einer Sicherungsposition zwischen der Sicherungseinrichtung (62) und dem Einspannabschnitt (38) gesichert gelagert ist,
**dadurch gekennzeichnet, dass**
die Sicherungseinrichtung (62) eine Mehrzahl von über einen Umfang des Spannzangenbauteils (39) verteilten und radial elastischen Stützelementen (90) in der Form eines Drahts aufweist, wobei in einer Ruheposition der Stützelemente (90) ein Biegeabschnitt (92) innerhalb des Spannzangenbauteils (39) befindlich ist und somit einen freien Querschnitt innerhalb des Spannzangenbauteils (39) verringert, wobei die radial elastischen Stützelemente (90) sich zurück in die Ruheposition bewegen, wenn der Flanschabschnitt (30) die Biegeabschnitte (92) passiert hat, wobei entsprechend eine Elastizität der Stützelemente (90) so zu wählen ist, dass ein Bolzen (26) die Stützelemente (90) nicht allein mit seiner Gewichtskraft aufbiegen kann, wobei die Stützelemente (90) einen Schaftabschnitt (28) des Bolzens (26) in der Sicherungsposition abstützen, so dass er nicht an dem Spannzangenbauteil (39) zur Anlage kommt und von der Schaftspanneinrichtung sicher gegriffen werden kann.

9. Fügekopf (14) zum Fügen von Bolzen (26) auf Werkstücke (24), mit einer Halteeinrichtung (60) zum Halten eines Bolzens (26) gemäß einem der Ansprüche 1 bis 8, und mit einer Schaftspanneinrichtung (50), die in die Halteeinrichtung (60) einführbar und dazu ausgelegt ist, den Schaftabschnitt (28) eines Bolzens (26) in der Sicherungsposition aufzunehmen, wobei die Schaftspanneinrichtung (50) dazu ausgelegt ist, den Bolzen (26) aus der Sicherungsposition in eine Bereitstellungsposition zu versetzen.

10. Verfahren zum Zuführen eines Bolzens (26) zu einem Fügekopf (14), der zum Fügen des Bolzens (26) auf ein Werkstück (24) dient, wobei der Bolzen (26) einen radial vorstehenden Flanschabschnitt (30) aufweist, mit den Schritten:
- Zuführen des Bolzens (26) in eine Halteeinrichtung (60) des Fügekopfes (14), bis der Flanschabschnitt (30) vor einem Einspannabschnitt (38) der Halteeinrichtung (60) angeordnet ist; und **gekennzeichnet durch**:
- Sichern des Bolzens (26) in der Position, indem eine Sicherungseinrichtung (62), die wenigstens zwei radial gegeneinander bewegliche Sicherungshülsenabschnitte (64a, 64b) aufweist, die als separate Bauteile ausgebildet sind und zusammen eine Sicherungshülse bilden, den Flanschabschnitt (30) hintergreift.

11. Verfahren nach Anspruch 10, wobei der Bolzen (26) in der Sicherungsposition von einer Spanneinrichtung (50) ergriffen und zentriert wird, bevor die Spanneinrichtung (50) in den Einspannabschnitt (38) eingeführt wird, um den Bolzen (26) in eine Bereitstellungsposition zu versetzen.

## Claims

1. Holding device (60) for studs (26) which have a radially projecting flange section (30), comprising a collet component (39) which has a clamping section (38) and a hollow insertion section (36), it being possible for a stud (26) to be inserted via the insertion section (36) to the clamping section (38), and the clamping section (38) being designed in order to exert a radially inwardly directed clamping force for clamping the stud (26) in place, a securing device (62), past which a flange section (30) of the stud (26) can be directed, being arranged on the insertion section (36) and being designed with respect to the clamping section (38) in such a way that a flange section (30) which is directed past the securing device (62) is mounted in a secured manner in a securing position between the securing device (62) and the clamping section (38), **characterized in that** the securing device (62) has at least two securing-sleeve sections (64a, 64b) which are movable radially relative to one another and which are designed as separate components and together form a securing sleeve.

2. Holding device according to Claim 1, **characterized in that** the securing-sleeve sections (64a, 64b), in the region of their securing ends adjacent to the clamping section (38), are prestressed toward one another in the radial direction by means of a prestressing device.

3. Holding device according to Claim 1 or 2, **characterized in that** the securing-sleeve sections (64a, 64b) have, in the region of their end opposite the clamping section (38), a collar section (66) which is movably mounted on a housing section (34) in such a way that the securing-sleeve sections (64a, 64b) can be expanded relative to one another in the radial direction at least in the region of their securing ends adjacent to the clamping section (38).

4. Holding device according to Claim 3, **characterized in that** the securing-sleeve sections (64a, 64b) can be pivoted relative to one another about a tilting axis (81) which is oriented transversely to the insertion direction and is arranged between the collar section (66) and the securing ends.

5. Holding device according to Claim 4, **characterized in that** the securing-sleeve sections (64a, 64b), on their sides pointing toward one another, are tapered from the tilting axis (81) toward the securing ends.

6. Holding device according to one of Claims 1 to 5, **characterized in that** the collet component (39) has clamping arms (40), which form the clamping section (38), and stop arms (44), which are axially longer than the clamping arms (40).

7. Holding device according to one of Claims 1 to 5, **characterized in that** the collet component (39) has a cylindrical slotted frontal region (41), which forms the clamping section (38).

8. Holding device (60) for studs (26) which have a radially projecting flange section (30), comprising a collet component (39) which has a clamping section (38) and a hollow insertion section (36), it being possible for a stud (26) to be inserted via the insertion section (36) to the clamping section (38), and the clamping section (38) being designed in order to exert a radially inwardly directed clamping force for clamping the stud (26) in place, a securing device (62), past which a flange section (30) of the stud (26) can be directed, being arranged on the insertion section (36) and being designed with respect to the clamping section (38) in such a way that a flange section (30) which is directed past the securing device (62) is mounted in a secured manner in a securing position between the securing device (62) and the clamping section (38), **characterized in that** the securing device (62) has a multiplicity of radially elastic support elements (90) which are distributed over the circumference of the collet component (39) and which are in the form of a wire, it being the case when the support elements (90) are in a rest position that a bend section (92) is situated within the collet component (39) and thus reduces a free cross section within the collet component (39), the radially elastic support elements (90) moving back into the rest position when the flange section (30) has passed the bend sections (92), it being the case that an elasticity of the support elements (90) should correspondingly be selected such that a stud (26) cannot bend the support elements (90) apart under the action of its weight alone, and the support elements (90) supporting a shank section (28) of the stud (26) in the securing position such that said shank section does not come into contact with the collet component (39) and can be reliably engaged by the shank-clamping device.

9. Joining head (14) for joining studs (26) to workpieces (24), comprising a holding device (60) for holding a stud (26) according to one of Claims 1 to 8, and comprising a shank-clamping device (50) which can be inserted into the holding device (60) and is designed in order to accommodate the shank section (28) of a stud (26) in the securing position, the shank-clamping device (50) being designed in order to shift the stud (26) from the securing position into a ready position.

10. Method of feeding a stud (26) to a joining head (14) which serves to join a stud (26) to a workpiece (24), the stud (26) having a radially projecting flange section (30), comprising the steps:
- feeding the stud (26) into a holding device (60) of the joining head (14) until the flange section (30) is arranged in front of a clamping section (38) of the holding device (60); and **characterized by**:
- securing the stud (26) in this position by a securing device (62) engaging behind the flange section (30), which securing device (62) has at least two securing-sleeve sections (64a, 64b) which are movable radially relative to one another and which are designed as separate components and together form a securing sleeve.

11. Method according to Claim 10, the stud (26) being taken hold of and centered in the securing position by a clamping device (50) before the clamping device (50) is inserted into the clamping section (38) in order to shift the stud (26) into the ready position.

## Revendications

1. Dispositif de maintien (60) pour boulons (26) qui comprennent une partie de collerette (30) faisant saillie radialement, comprenant un composant de pince de serrage (39) qui comprend une partie de serrage (38) et une partie d'insertion creuse (36), un boulon (26) pouvant être inséré par le biais de la partie d'insertion (36) jusqu'à la partie de serrage (38) et la partie de serrage (38) étant conçue pour exercer une force de serrage orientée radialement vers l'intérieur pour serrer le boulon (26), un dispositif de fixation (62), devant lequel peut être guidée une partie de collerette (30) du boulon (26), étant disposé sur la partie d'insertion (36) et étant réalisé, par rapport à la partie de serrage (38), de telle sorte qu'une partie de collerette (30) qui est guidée devant le dispositif de fixation (62) soit montée de manière fixe dans une position de fixation entre le dispositif de fixation (62) et la partie de serrage (38),
**caractérisé en ce que**
le dispositif de fixation (62) comprend au moins deux parties de douille de fixation (64a, 64b) mobiles radialement les unes par rapport aux autres, lesquelles sont réalisées sous forme de composants séparés et forment conjointement une douille de fixation.

2. Dispositif de maintien selon la revendication 1, **caractérisé en ce que** les parties de douille de fixation (64a, 64b) sont, dans la région de leurs extrémités de fixation adjacentes à la partie de serrage (38), précontraintes en direction les unes des autres dans la direction radiale au moyen d'un dispositif de précontrainte.

3. Dispositif de maintien selon la revendication 1 ou 2, **caractérisé en ce que** les parties de douille de fixation (64a, 64b) comprennent, dans la région de leur extrémité opposée à la partie de serrage (38), une partie de collet (66) qui est montée de manière mobile sur une partie de boîtier (34), de telle sorte que les parties de douille de fixation (64a, 64b) puissent, au moins dans la région de leurs extrémités de fixation adjacentes à la partie de serrage (38), être élargies les unes par rapport aux autres dans la direction radiale.

4. Dispositif de maintien selon la revendication 3, **caractérisé en ce que** les parties de douille de fixation (64a, 64b) peuvent être pivotées les unes par rapport aux autres autour d'un axe d'inclinaison (81) qui est orienté transversalement à la direction d'insertion et est disposé entre la partie de collet (66) et les extrémités de fixation.

5. Dispositif de maintien selon la revendication 4, **caractérisé en ce que** les parties de douille de fixation (64a, 64b) sont biseautées, sur leurs côtés tournés les uns vers les autres, à partir de l'axe d'inclinaison (81) en direction des extrémités de fixation.

6. Dispositif de maintien selon l'une quelconque des revendications 1 à 5, **caractérisé en ce que** le composant de pince de serrage (39) comprend des bras de serrage (40) qui forment la partie de serrage (38) et des bras de butée (44) qui sont plus longs axialement que les bras de serrage (40).

7. Dispositif de maintien selon l'une quelconque des revendications 1 à 5, **caractérisé en ce que** le composant de pince de serrage (39) comprend une région avant (41) cylindrique fendue qui forme la partie de serrage (38).

8. Dispositif de maintien (60) pour boulons (26) qui comprennent une partie de collerette (30) faisant saillie radialement, comprenant un composant de pince de serrage (39) qui comprend une partie de serrage (38) et une partie d'insertion creuse (36), un boulon (26) pouvant être inséré par le biais de la partie d'insertion (36) jusqu'à la partie de serrage (38) et la partie de serrage (38) étant conçue pour exercer une force de serrage orientée radialement vers l'intérieur pour serrer le boulon (26), un dispositif de fixation (62), devant lequel peut être guidée une partie de collerette (30) du boulon (26), étant disposé sur la partie d'insertion (36) et étant réalisé, par rapport à la partie de serrage (38), de telle sorte qu'une partie de collerette (30) qui est guidée devant le dispositif de fixation (62) soit montée de manière fixe dans une position de fixation entre le dispositif de fixation (62) et la partie de serrage (38),
**caractérisé en ce que**
le dispositif de fixation (62) comprend une pluralité d'éléments de support (90) radialement élastiques et répartis sur une périphérie du composant de pince de serrage (39), lesquels éléments de support se présentent sous forme de fil, une partie fléchie (92) se trouvant à l'intérieur du composant de pince de serrage (39) lorsque les éléments de support (90) sont dans une position de repos et réduisant par conséquent une section transversale libre à l'intérieur du composant de pince de serrage (39), les éléments de support (90) radialement élastiques revenant à la position de repos une fois que la partie de collerette (30) a dépassé les parties fléchies (92), une élasticité des éléments de support (90) devant être choisie de manière correspondante de telle sorte qu'un boulon (26) ne puisse pas plier en les écartant les éléments de support (90) uniquement sous l'effet de son poids, les éléments de support (90) supportant une partie de tige (28) du boulon (26) dans la position de fixation, de telle sorte qu'elle ne vienne pas en appui contre le composant de pince de serrage (39) et qu'elle puisse être saisie de manière sûre par le dispositif de serrage de tige.

9. Tête d'assemblage (14) pour assembler des boulons (26) sur des pièces (24), comprenant un dispositif de maintien (60) pour maintenir un boulon (26) selon l'une quelconque des revendications 1 à 8, et comprenant un dispositif de serrage de tige (50) qui peut être inséré dans le dispositif de maintien (60) et est conçu pour recevoir la partie de tige (28) d'un boulon (26) dans la position de fixation, le dispositif de serrage de tige (50) étant conçu pour décaler le boulon (26) de la position de fixation à une position de mise à disposition.

10. Procédé pour acheminer un boulon (26) jusqu'à une tête d'assemblage (14) qui sert à l'assemblage du boulon (26) sur une pièce (24), le boulon (26) comprenant une partie de collerette (30) faisant saillie radialement, lequel procédé comprend l'étape de :
- acheminement du boulon (26) dans un dispositif de maintien (60) de la tête d'assemblage (14), jusqu'à ce que la partie de collerette (30) soit disposée devant une partie de serrage (38) du dispositif de maintien (60) ; et **caractérisé par** :
- la fixation du boulon (26) dans cette position, du fait qu'un dispositif de fixation (62), qui comprend au moins deux parties de douille de fixation (64a, 64b) mobiles radialement les unes par rapport aux autres qui sont réalisées sous forme de composants séparés et forment conjointement une douille de fixation, vient en prise par l'arrière avec la partie de collerette (30).

11. Procédé selon la revendication 10, dans lequel le boulon (26) est saisi et centré par un dispositif de serrage (50) dans la position de fixation, avant que le dispositif de serrage (50) ne soit introduit dans la partie de serrage (38), afin de décaler le boulon (26) dans une position de mise à disposition.
